# EUROPEAN PATENT APPLICATION

(11) **EP 1 884 873 A2**
(43) Date of publication of application: **06.02.2008**
(21) Application number: 07011781.7
(22) Date of filing: 15.06.2007
(51) Int. Cl.: G06F 12/14

(54) **Memory access control apparatus and method, and communication apparatus**

(30) Priority: 25.07.2006 JP 2006201505
(71) Applicant: Sony Corporation, Minato-ku Tokyo 108-0075 (JP)
(72) Inventor: Muraoka, Jochiku, Tokyo, 108-0075 (JP)
(74) Representative: Müller - Hoffmann & Partner

(57) **Abstract**

A memory access control apparatus includes the following elements: a scrambling key generator configured to generate a binary scramble key including predetermined low-order bits being fixed values where the value of the least significant bit is one and the remaining bits being a random number or a pseudo-random number; and an assigning unit configured to scramble a logical address using the scramble key to assign a physical address to the logical address.

## Description

### CROSS REFERENCES TO RELATED APPLICATIONS

The present invention contains subject matter related to Japanese Patent Application JP 2006-201505 filed in the Japanese Patent Office on July 25, 2006, the entire contents of which are incorporated herein by reference.

### BACKGROUND OF THE INVENTION

### 1. Field of the Invention

The present invention relates to memory access control apparatuses and methods and communication apparatuses, and more particularly, to a memory access control apparatus and method for easily enhancing security of data in a memory, and to a communication apparatus.

### 2. Description of the Related Art

Proposals have been made, such as in PCT Japanese Translation Patent Publication No. 2003-500786, to assign a physical address for actual access to a memory by scrambling a logical address specified to be accessed from a processor, such as a central processing unit (CPU) or the like, thereby making it difficult to analyze or tamper data in the memory.

### SUMMARY OF THE INVENTION

In recent years where unauthorized data interception and tampering has become more sophisticated, besides the technique described in PCT Japanese Translation Patent Publication No. 2003-500786, a strong demand has been made to enhance security of data in a memory.

It is desirable to easily enhance security of data in a memory.

According to a first embodiment of the present invention, there is provided a memory access control apparatus including the following elements: scramble key generating means for generating a binary scramble key including predetermined low-order bits being fixed values where the value of the least significant bit is one and the remaining bits being a random number or a pseudo-random number; and assigning means for scrambling a logical address using the scramble key to assign a physical address to the logical address.

The scramble key generating means may generate the scramble key in which the fixed values are a bit stream including only ones.

The memory access control apparatus may further include random number generating means for generating the random number or the pseudo-random number.

The random number generating means may generate a Gold-sequence pseudo-random number.

The random number generating means may generate a new random number or a new pseudo-random number in the case that the generated random number or the generated pseudo-random number is equal to a predetermined value.

According to the first embodiment of the present invention, there is provided a memory access control method including the steps of: generating a binary scramble key including predetermined low-order bits being fixed values where the value of the least significant bit is one and the remaining bits being a random number or a pseudo-random number; and scrambling a logical address using the scramble key to assign a physical address to the logical address.

According to a second embodiment of the present invention, there is provided a communication apparatus including the following elements: scramble key generating means for generating a binary scramble key including predetermined low-order bits being fixed values where the value of the least significant bit is one and the remaining bits being a random number or a pseudo-random number; and assigning means for scrambling a logical address using the scramble key to assign a physical address to the logical address, the physical address being used for storing data read from a device with a contactless integrated circuit card function.

According to the first embodiment of the present invention, a binary scramble key including predetermined low-order bits being fixed values where the value of the least significant bit is one and the remaining bits being a random number or a pseudo-random number is generated, and a logical address is scrambled using the scramble key to assign a physical address to the logical address.

According to the second embodiment of the present invention, a binary scramble key including predetermined low-order bits being fixed values where the value of the least significant bit is one and the remaining bits being a random number or a pseudo-random number is generated, and a logical address is scrambled using the scramble key to assign a physical address to the logical address, the physical address being used for storing data read from a device with a contactless integrated circuit card function.

According to the first or second embodiment of the present invention, data in a memory becomes difficult to analyze or tamper. According to the first or second embodiment of the present invention, security of data in a memory can be easily enhanced.

### BRIEF DESCRIPTION OF THE DRAWINGS

Fig. 1 is a block diagram of a reader/writer according to an embodiment of the present invention;
Fig. 2 is a block diagram showing a functional configuration of a control module shown in Fig. 1;
Fig. 3 is a block diagram showing a functional configuration of a random-number output unit shown in Fig. 2;
Fig. 4 is a block diagram showing a detailed functional configuration of a bus scrambler shown in Fig. 2;
Fig. 5 is a diagram for describing the sequence of values in internal registers of a scramble key buffer shown in Fig. 2;
Fig. 6 is a flowchart for describing a scramble key generating process executed by the reader/writer shown in Fig. 1;
Fig. 7 is a flowchart for describing a memory access controlling process executed by the reader/writer shown in Fig. 1;
Fig. 8 is a block diagram showing a functional configuration of a random-number output unit shown in Fig. 2 according to a second embodiment of the present invention; and
Fig. 9 is a flowchart for describing a scramble key generating process executed by the reader/writer shown in Fig. 1 in the case that the reader/writer has the random-number output unit shown in Fig. 8.

### DESCRIPTION OF THE PREFERRED EMBODIMENTS

Before describing embodiments of the present invention, the correspondence between the features of the claims and the specific elements disclosed in embodiments of the present invention described with reference to the specification or the drawings is discussed below. This description is intended to assure that embodiments supporting the claimed invention are described in this specification or the drawings. Thus, even if an element in the following embodiments is not described as relating to a certain feature of the present invention in the specification or the drawings, that does not necessarily mean that the element does not relate to that feature of the claims. Conversely, even if an element is described herein as relating to a certain feature of the claims, that does not necessarily mean that the element does not relate to other features of the claims.

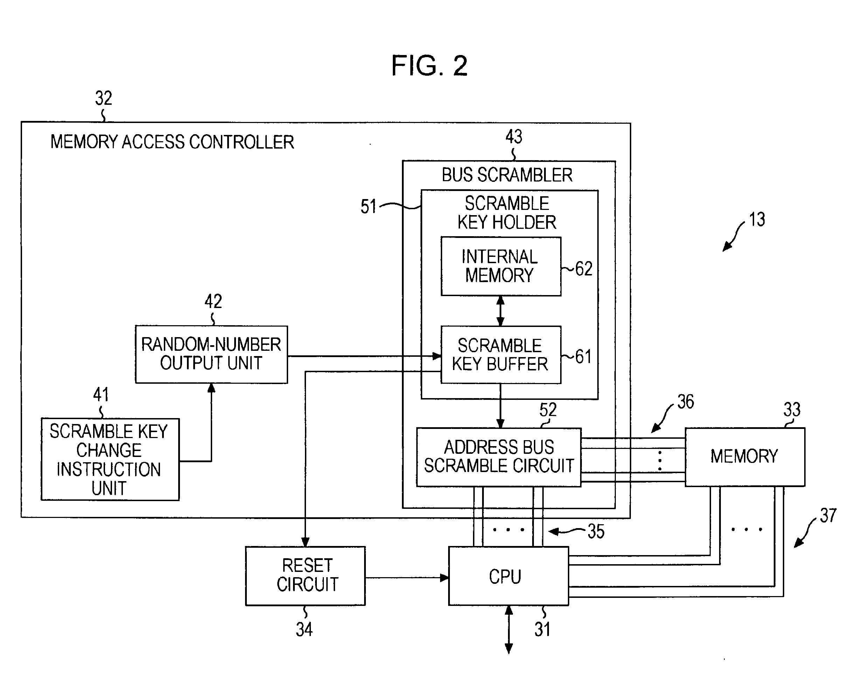

According to a first embodiment of the present invention, there is provided a memory access control apparatus (e.g., a bus scrambler 43 shown in Fig. 2) including the following elements: scramble key generating means (e.g., a scramble key buffer 61 shown in Fig. 2) for generating a binary scramble key including predetermined low-order bits being fixed values where the value of the least significant bit is one and the remaining bits being a random number or a pseudo-random number; and assigning means (e.g., a memory 33 shown in Fig. 2) for scrambling a logical address using the scramble key to assign a physical address to the logical address.

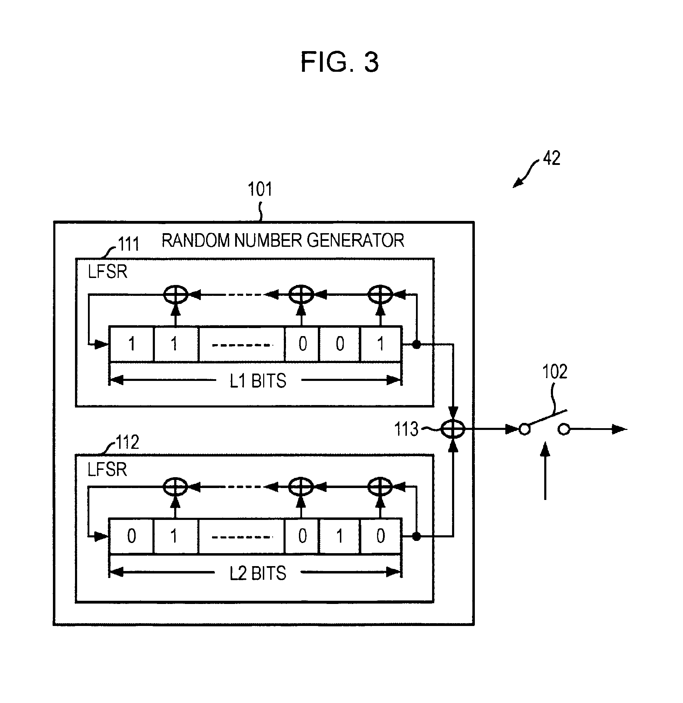

The memory access control apparatus according to the first embodiment of the present invention may further include random number generating means (e.g., a random number generator 101 shown in Fig. 3) for generating the random number or the pseudo-random number serving as the scramble key.

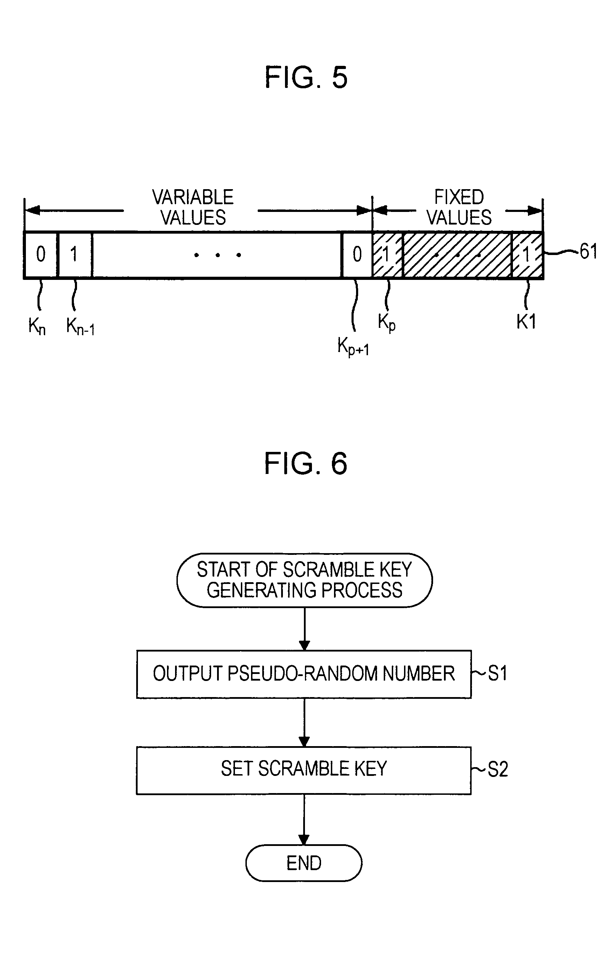

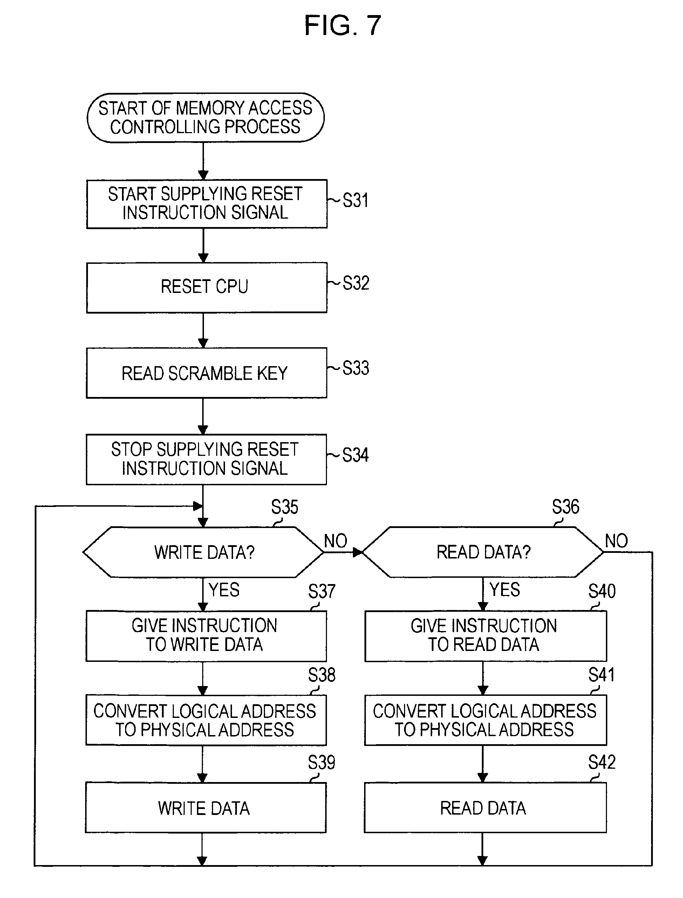

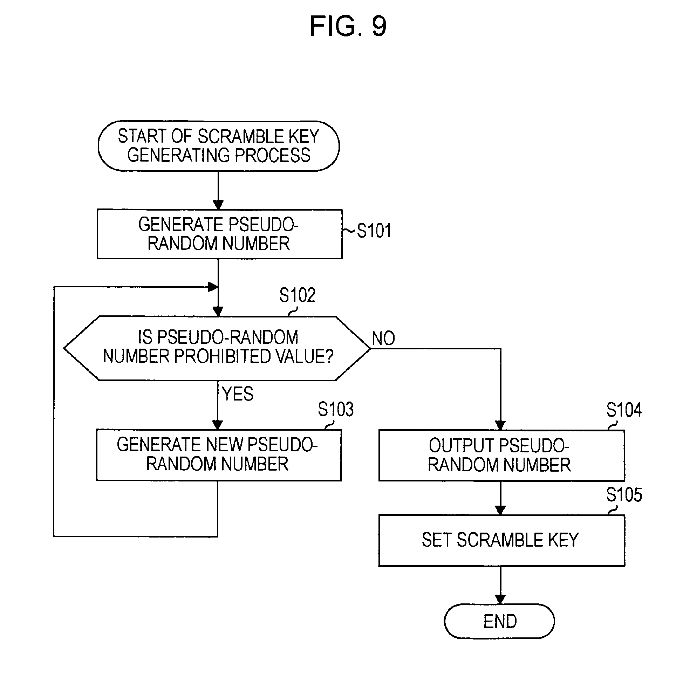

According to the first embodiment of the present invention, there is provided a memory access control method including the steps of: generating a binary scramble key including predetermined low-order bits being fixed values where the value of the least significant bit is one and the remaining bits being a random number or a pseudo-random number (e.g., step S2 shown in Fig. 6 or step S105 shown in Fig. 9); and scrambling a logical address using the scramble key to assign a physical address to the logical address (e.g., step S38 or S41 in Fig. 7).

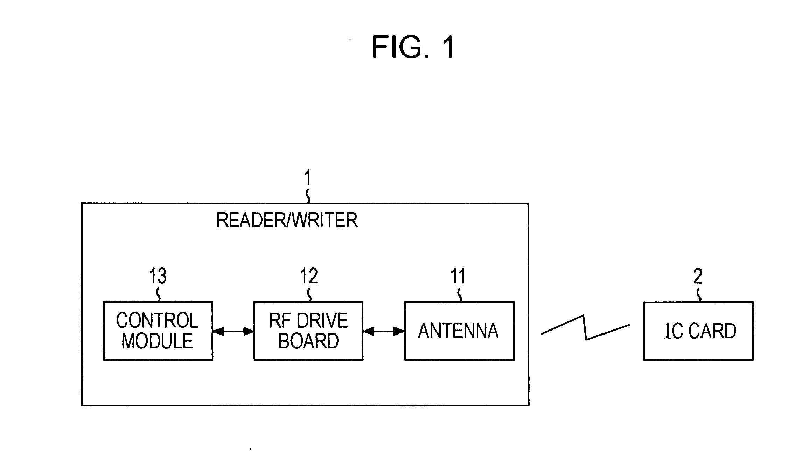

According to a second embodiment of the present invention, there is provided a communication apparatus (e.g., a reader/writer 1 shown in Fig. 1) for communicating with a device with a contactless integrated circuit card function (e.g., an IC card 2 shown in Fig. 1), including the following elements: scramble key generating means (e.g., the scramble key buffer 61 shown in Fig. 2) for generating a binary scramble key including predetermined low-order bits being fixed values where the value of the least significant bit is one and the remaining bits being a random number or a pseudo-random number; and assigning means (e.g., an address bus scramble circuit 52 shown in Fig. 2) for scrambling a logical address using the scramble key to assign a physical address to the logical address, the physical address being used for storing data read from the device with the contactless integrated circuit card function.

Embodiments of the present invention will now be described below with reference to the drawings.

Fig. 1 is a block diagram of a reader/writer according to an embodiment of the present invention. A reader/writer 1 according to the embodiment of the present invention includes an antenna 11, a radio-frequency (RF) drive board 12, and a control module 13.

The RF drive board 12 performs near field communication based on electromagnetic induction using a single-frequency carrier with a contactless integrated circuit (IC) card 2 via the antenna 11. The frequency of the carrier used by the RF drive board 12 may be, for example, 13.56 MHz in the industrial scientific medical (ISM) band. Near field communication means that devices can communicate with each other when the distance between the devices is within a few tens of centimeters and includes communication where the (frames housing the) devices are in contact with each other.

The control module 13 executes processing for implementing services using the IC card 2. As necessary, the control module 13 reads/writes data used in the services from/to the IC card 2 via the antenna 11 and the RF drive board 12. The control module 13 can perform parallel processing for providing a plurality of types of services. That is, one reader/writer 1 can provide a plurality of services using a contactless IC card, such as an electronic money service, a prepaid card service, and a ticket card service for taking various types of transportation.

Fig. 2 is a block diagram showing a functional configuration of the control module 13 shown in Fig. 1. The control module 13 includes a CPU 31, a memory access controller 32, a memory 33, and a reset circuit 34. The memory access controller 32 includes a scramble key change instruction unit 41, a random-number output unit 42, and a bus scrambler 43. The bus scrambler 43 includes a scramble key holder 51 and an address bus scramble circuit 52. The scramble key holder 51 includes a scramble key buffer 61 and an internal memory 62.

The CPU 31 and the address bus scramble circuit 52 are connected to each other with an address bus 35 provided therebetween, and the bus width of the address bus 35 is n bits. The address bus scramble circuit 52 and the memory 33 are connected to each other with an address bus 36 provided therebetween, and the bus width of the address bus 36 is similarly n bits. The CPU 31 and the memory 33 are connected to each other with a data bus 37 provided therebetween, and the bus width of the data bus 37 is m bits.

The CPU 31 executes predetermined programs to perform processing to implement the services using the IC card 2. The CPU 31 can execute programs associated with the services in parallel to one another. In other words, the CPU 31 can perform parallel processing to provide the services.

The CPU 31 reads/writes data used in each of the services from/to the memory 33. When writing data to the memory 33, the CPU 31 supplies a logical address signal indicating a logical address of a logical data writing position to the address bus scramble circuit 52 via the address bus 35 and supplies a write signal including data to be written and indicating a data write instruction to the memory 33 via the data bus 37. When reading data from the memory 33, the CPU 31 supplies a logical address signal indicating a logical address of a logical data reading position to the address bus scramble circuit 52 via the address bus 35 and supplies a read signal indicating a data read instruction to the memory 33 via the data bus 37.

The memory access controller 32 controls access of the CPU 31 to the memory 33.

Among the individual elements included in the memory access controller 32, the scramble key change instruction unit 41 includes, for example, a button, a switch, or the like. To change a scramble key held in the scramble key holder 51, for example, a user inputs an instruction to change the scramble key via the scramble key change instruction unit 41.

In the case that a signal indicating the instruction to change the scramble key is supplied from the scramble key change instruction unit 41 to the random-number output unit 42, the random-number output unit 42 generates a pseudo-random number including a bit stream of n-p bits and outputs the generated pseudo-random number as a scramble key to the scramble key buffer 61.

The bus scrambler 43 performs processing to convert the logical address indicated by the logical address signal supplied from the CPU 31 to a physical address for actually accessing the memory 33.

Among the individual elements included in the bus scrambler 43, the scramble key holder 51 generates a scramble key using the pseudo-random number supplied from the random-number output unit 42 and holds the generated scramble key. More specifically, the scramble key buffer 61 of the scramble key holder 51 generates a scramble key using the pseudo-random number supplied from the random-number output unit 42 and holds the generated scramble key. At the same time, the scramble key buffer 61 supplies and stores the generated scramble key in the internal memory 62. The internal memory 62 is a non-volatile memory, such as a flash memory, or a random access memory (RAM) backed up by a battery or the like. Even in the case that power of the control module 13 is turned off, the internal memory 62 continuously holds the scramble key. When the control module 13 is turned on from off, the scramble key buffer 61 reads the scramble key stored in the internal memory 62 and holds the scramble key. Furthermore, the scramble key buffer 61 supplies a reset instruction signal to the reset circuit 34 during a period from turning on of the control module 13 to completion of reading the scramble key from the internal memory 62.

Using the scramble key held in the scramble key buffer 61, the address bus scramble circuit 52 scrambles the logical address indicated by the logical address signal supplied from the CPU 31, thereby converting the logical address to the physical address for actually accessing the memory 33. In other words, the address bus scramble circuit 52 scrambles an input logical address to assign a physical address to the logical address. The address bus scramble circuit 52 supplies a physical address signal indicating the converted physical address to the memory 33 via the address bus 36.

The memory 33 is a non-volatile memory, such as a flash memory, an electrically erasable and programmable read only memory (EEPROM), a hard disk drive (HDD), a magnetoresistive RAM (MRAM), a ferroelectric RAM (FeRAM), or an ovonic unified memory (OUM). In the case that the write signal is supplied from the CPU 31 to the memory 33, data included in the write signal is written to the physical address on the memory 33, which is indicated by the physical address signal supplied from the address bus scramble circuit 52. In the case that the read signal is supplied from the CPU 31 to the memory 33, data is read from the physical address on the memory, which is indicated by the physical address signal supplied from the address bus scramble circuit 52, and the read data is supplied to the CPU 31 via the data bus 37.

The reset circuit 34 supplies a reset signal to the CPU 31 while a reset instruction signal is being supplied from the scramble key buffer 61, thereby initializing the state of the CPU 31.

Fig. 3 is a block diagram showing a functional configuration of the random-number output unit 42. The random-number output unit 42 includes a random number generator 101 and a switch 102.

The random number generator 101 includes a linear-feedback-shift-register (LFSR) random number generator 111 having an L1-bit shift register, an LFSR random number generator 112 having an L2-bit shift register, and an exclusive-or (EXOR) circuit 113.

The LFSR random number generators 111 and 112 are based on the known LFSR principle of inputting the EXOR of values of predetermined bits of a shift register as a feedback value to the shift register. The random number generator 101 generates a Gold-sequence pseudo-random number by computing bit-by-bit the EXOR of two different maximum-length-sequence (M-sequence) pseudo-random numbers generated by the LFSR random number generators 111 and 112, respectively, using the EXOR circuit 113. The number of the LFSR random number generators 111 and 112 included in the random number generator 101 is not limited to two. The random number generator 101 may have three or more LFSR random number generators.

The switch 102 is turned on in response to an input of a signal indicating an instruction to change the scramble key from the scramble key change instruction unit 41. The bit stream indicating the Gold-sequence pseudo-random number generated by the random number generator 101 is output to the scramble key buffer 61 via the switch 102.

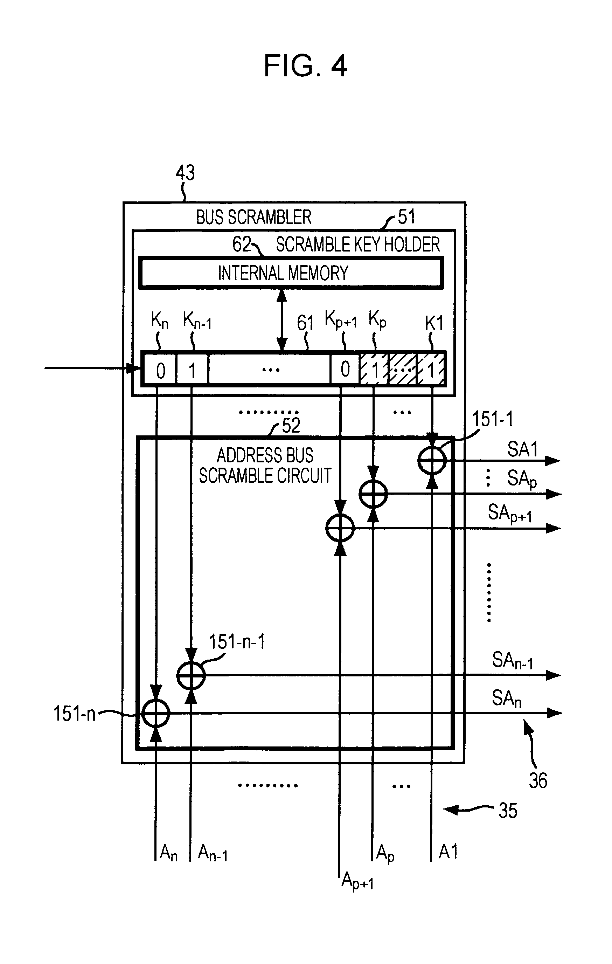

Fig. 4 is a block diagram showing a detailed functional configuration of the bus scrambler 43.

The scramble key buffer 61 includes an n-bit shift register having serial and parallel input and parallel output. As shown in Fig. 5, among internal registers of the scramble key buffer 61, the low-order p bits (from bits K1 to Kₚ) are fixed values, and the pseudo-random number supplied as a serial signal from the random-number output unit 42 is set to the remaining, high-order n-p bits (from bits Kₚ₊₁ to Kₙ). That is, the scramble key buffer 61 generates and holds a binary scramble key including predetermined low-order p bits as fixed values and the remaining n-p bits as a pseudo-random number. The least significant bit (LSB) of the p bits of the fixed values is set to one at all times. That is, the LSB of the scramble key is set to one at all times.

The address bus scramble circuit 52 computes bit by bit the EXOR of the n-bit logical address including bits A1 to Aₙ indicated by the logical address signal supplied from the CPU 31 via the address bus 35 and the n-bit scramble key including the bits K1 to Kₙ held in the scramble key buffer 61 using EXOR circuits 151-1 to 151-n, thereby converting the logical address to an n-bit physical address including bits SA1 to SAₙ. The address bus scramble circuit 52 supplies a physical address signal indicating the converted physical address to the memory 33 via the address bus 36.

Referring now to Figs. 6 and 7, processing performed by the reader/writer 1 will be described.

With reference to the flowchart shown in Fig. 6, a scramble key generating process performed by the reader/writer 1 will be described. This process starts when a user inputs an instruction to change the scramble key via the scramble key change instruction unit 41 in the case that the reader/writer 1 is turned on.

In step S1, the random-number output unit 42 outputs a pseudo-random number. More specifically, the scramble key change instruction unit 41 supplies a signal indicating an instruction to change the scramble key to the switch 102, thereby turning on the switch 102. While the power of the reader/writer 1 is on, the random number generator 101 generates a pseudo-random number at all times. By turning on the switch 102, the random number generator 101 starts outputting the pseudo-random number to the scramble key buffer 61 via the switch 102. The switch 102 is turned off in the case that the random number generator 101 outputs the n-p bits of the pseudo-random number.

In step S2, the bus scrambler 43 sets a scramble key, and the scramble key generating process ends. More specifically, the scramble key buffer 61 sets the pseudo-random number including the n-p bits of the bit stream supplied from the random-number output unit 42 to the high-order n-p bits of the internal registers. Accordingly, an n-bit scramble key including the p low-order bits of the fixed values and the n-p high-order bits of the pseudo-random number is generated. The scramble key buffer 61 holds the generated scramble key in the internal registers and supplies and stores the scramble key in the internal memory 62. That is, the scramble key is backed up in the internal memory 62.

Accordingly, a scramble key that has a different value and that is difficult to predict can be set to each control module 13. This scramble key setting process is performed, for example, before the reader/writer 1 is shipped out from a factory.

Next, with reference to the flowchart of Fig. 7, a memory access controlling process performed by the reader/writer 1 will be described. This process starts, for example, in the case that the reader/writer 1 is turned on.

In step S31, the scramble key buffer 61 starts supplying a reset instruction signal to the reset circuit 34 in the case that the reader/writer 1 is turned on and the control module 13 is turned on.

In step S32, the reset circuit 34 starts supplying a reset signal to the CPU 31, thereby resetting the CPU 31. Accordingly, the state of the CPU 31 is initialized.

In step S33, the scramble key buffer 61 reads the scramble key held in the internal memory 62. The scramble key buffer 61 holds the read scramble key in the internal registers.

In step S34, the scramble key buffer 61 stops supplying the reset instruction signal to the reset circuit 34. Accordingly, the reset circuit 34 stops supplying the reset signal to the CPU 31. The CPU 31 starts executing a program.

In step S35, the CPU 31 determines whether to write data. In the case that the next processing in the program being executed by the CPU 31 does not involve writing data, the CPU 31 determines not to write data, and the flow proceeds to step S36.

In step S36, the CPU 31 determines whether to read data. In the case that the next processing in the program being executed by the CPU 31 does not involve reading data, the CPU 31 determines not to read data, and the flow returns to step S35.

The processing in steps S35 and S36 is repeated until it is determined to write data in step S35 or to read data in step S36.

In the case that in step S35 the next processing in the program being executed by the CPU 31 involves writing data, the CPU 31 determines to write data, and the flow proceeds to step S37.

In step S37, the CPU 31 gives an instruction to write data. More specifically, the CPU 31 supplies a logical address signal indicating a logical address of a logical data writing position to the address bus scramble circuit 52 via the address bus 35 and supplies a write signal including data to be written and indicating an instruction to write data to the memory 33 via the data bus 37.

In step S38, the address bus scramble circuit 52 converts the logical address to a physical address. More specifically, the address bus scramble circuit 52 computes bit by bit the EXOR of the logical address indicated by the logical address signal and the scramble key held in the scramble key buffer 61 to scramble the logical address, thereby converting the logical address to a physical address. The address bus scramble circuit 52 supplies a physical address signal indicating the converted physical address to the memory 33 via the address bus 36.

In step S39, the memory 33 writes data. More specifically, the memory 33 writes data included in the write signal supplied from the CPU 31 to the physical address on the memory 33, which is indicated by the physical address signal. Accordingly, even in the case that the CPU 31 gives an instruction to write data to consecutive logical addresses, the data is actually written to randomly arranged positions on the memory 33. It thus becomes difficult to analyze or tamper the data stored in the memory 33.

In the case that consecutive low-order bits of the scramble key are zeros, the low-order bits of the logical address corresponding to the bits of consecutive zeros are assigned without being converted to the physical address. Therefore, on the memory 33 over the range where the low-order bits are not converted, the data is arranged in the same sequence as the logical address. For example, in the case that three consecutive low-order bits of the scramble key are zeros, three low-order bits of the logical address are assigned without being converted to the physical address, and, on the memory 33 over the range of the address where the low-order bits are not converted, the data is arranged in the same sequence as the logical address. Accordingly, the data is more likely to be analyzed. In contrast, as has been described above, the LSB of the scramble key held in the scramble key buffer 61 is fixed to one, and hence the LSB of the logical address is scrambled at all times. Therefore, on the memory, the data is prevented from being arranged in the same sequence as the logical address, whereby the data reliably becomes more difficult to analyze.

By setting the fixed values of the scramble key to a bit stream including only ones, the data stream can be reliably scrambled and arranged in a more detailed manner, whereby the data becomes more difficult to analyze.

Thereafter, the flow returns to step S35, and the processing from step S35 onward is performed.

In step S36, in the case that the next processing in the program being executed by the CPU 31 involves reading data, the CPU 31 determines to read data, and the flow proceeds to step S40.

In step S40, the CPU 31 gives an instruction to read data. More specifically, the CPU 31 supplies a logical address signal indicating a logical address of a logical data reading position to the address bus scramble circuit 52 via the address bus 35 and supplies a read signal indicating a data read instruction to the memory 33 via the data bus 37.

In step S41, as in the above-described processing in step S38, the logical address is converted to a physical address, and a physical address signal indicating the converted physical address is supplied from the address bus scramble circuit 52 to the memory 33 via the address bus 36.

In step S42, the memory 33 reads data. More specifically, the memory 33 reads data stored at the physical address indicated by the physical address signal and supplies the read data to the CPU 31 via the data bus 37.

Thereafter, the flow returns to step S35, and the processing from step S35 onward is performed.

As has been described above, different scramble keys can be easily set to different control modules 13. Even in the case that a scramble key set to one control module 13 is analyzed, data stored in the memory 33 of another control module 13 is prevented from being analyzed or tampered using that scramble key. Thus, damage due to data leakage or tampering can be kept to minimum.

Techniques in the related art can be employed in performing the pseudo-random number generating method and the address scrambling method. Since no new complicated circuit is necessary and it is only necessary for the user to perform an additional step of inputting an instruction to change the scramble key, security of data in the memory 33 can be easily enhanced.

As has been described above, the data is prevented from being arranged in the memory 33 in the same sequence as the logical address, and hence the data reliably becomes more difficult to analyze.

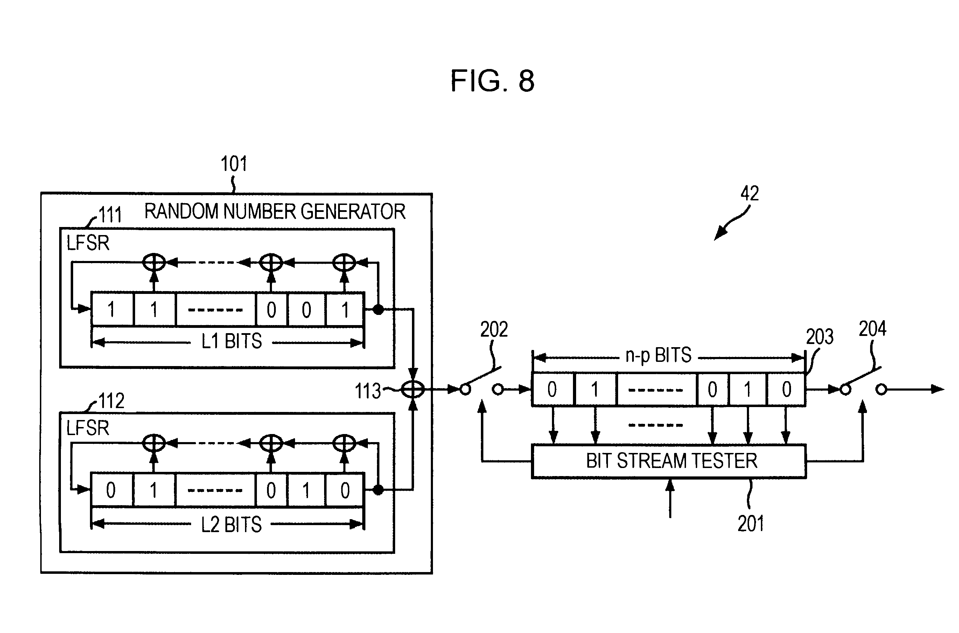

Referring now to Figs. 8 and 9, the random-number output unit 42 according to a second embodiment of the present invention will be described.

Fig. 8 is a block diagram showing a functional configuration of the random-number output unit 42 according to the second embodiment. The random-number output unit 42 shown in Fig. 8 includes the random number generator 101, a bit stream tester 201, a switch 202, a random number storage unit 203 including an n-p-bit shift register, and a switch 204. In Fig. 8, portions corresponding to those in Fig. 3 are referred to using the same reference numerals, and descriptions of portions performing the same processing are omitted to avoid redundancy.

The bit stream tester 201 obtains a signal indicating an instruction to change the scramble key from the scramble key change instruction unit 41. In the case that the signal indicating the instruction to change the scramble key is supplied from the scramble key change instruction unit 41, the bit stream tester 201 turns on the switch 202. Accordingly, a bit stream indicating a Gold-sequence pseudo-random number generated by the random number generator 101 is supplied from the random number generator 101 to the random number storage unit 203 via the switch 202 and stored in the random number storage unit 203.

The bit stream tester 201 tests whether the pseudo-random number stored in the random number storage unit 203 matches any predetermined prohibited value. In the case that the pseudo-random number stored in the random number storage unit 203 matches a prohibited value, the bit stream tester 201 turns on the switch 202 and outputs a pseudo-random number including a predetermined number of bits from the random number generator 101 to the random number storage unit 203, thereby changing the values of the pseudo-random number stored in the random number storage unit 203. In the case that the pseudo-random number stored in the random number storage unit 203 does not match any prohibited value, the bit stream tester 201 turns on the switch 204. Accordingly, the pseudo-random number including the n-p-bit bit stream stored in the random number storage unit 203 is output to the scramble key buffer 61 via the switch 204. That is, in the case that the pseudo-random number generated by the random number generator 101 is equal to a predetermined prohibited value, the bit stream tester 201 controls the random number generator 101 to generate a new random number and outputs this random value different from the prohibited value to the scramble key buffer 61.

Next, with reference to the flowchart of Fig. 9, in the case that the random-number output unit 42 shown in Fig. 8 is provided in the reader/writer 1, a scramble key generating process performed by the reader/writer 1 instead of that shown in the flowchart of Fig. 6 will be described. This process starts when, for example, the user inputs an instruction to change the scramble key via the scramble key change instruction unit 41 in the case that the power of the reader/writer 1 is on.

In step S101, the random-number output unit 42 generates a pseudo-random number. More specifically, the scramble key change instruction unit 41 supplies a signal indicating an instruction to change the scramble key to the bit stream tester 201. The bit stream tester 201 turns on the switch 202. The random number generator 101 generates a pseudo-random number at all times while the power of the reader/writer 1 is on. By turning on the switch 202, the random number generator 101 starts outputting the pseudo-random number to the random number storage unit 203 via the switch 202. The bit stream tester 201 turns off the switch 202 in the case that the random number generator 101 outputs the n-p bits of the pseudo-random number.

In step S102, the bit stream tester 201 determines whether the pseudo-random number is a prohibited value. For example, values that may be easier to predict than other values, such as a bit stream including identical consecutive values, e.g., 111 ... 111, or a bit stream having alternate different values, e.g., 0101 ... 0101 or 1010 ... 1010, are set in advance in the bit stream tester 201 by the user as values prohibited to be used as a scramble key. In the case that the value obtained by removing the low-order fixed values of the scramble key from each of these prohibited values matches the pseudo-random number stored in the random number storage unit 203, the bit stream tester 201 determines that the pseudo-random number is a prohibited value, and the flow proceeds to step S103.

In step S103, the bit stream tester 201 generates a new pseudo-random number. More specifically, the bit stream tester 201 turns on the switch 202 and outputs a pseudo-random number including a predetermined number of bits from the random number generator 101 to the random number storage unit 203. The random number storage unit 203 shifts up the stored bit stream by the number of bits of the newly input pseudo-random number and adds the input pseudo-random number to the end of the bit stream. That is, the new pseudo-random number generated by the random number generator 101 is stored in the random number storage unit 203.

Thereafter, the flow returns to step S102. The processing in steps S102 and S103 is repeated until it is determined in step S102 that the pseudo-random number is not a prohibited value.

In the case that it is determined in step S102 that the pseudo-random number is not a prohibited value, the flow proceeds to step S104.

In step S104, the random-number output unit 42 outputs the pseudo-random number. More specifically, the bit stream tester 201 turns on the switch 204. Accordingly, the pseudo-random number stored in the random number storage unit 203 is output to the scramble key buffer 61 via the switch 204.

In step S105, as in the above-described processing in step S2 shown in Fig. 6, the scramble key is set, and the scramble key generating process ends.

Since an easy-to-predict value is prevented from being set as a scramble key in the above described manner, data stored in the memory 33 is difficult to analyze or tamper, thereby enhancing security of the data in the memory 33. Furthermore, the scramble key becomes more difficult to analyze by changing the scramble key at the time the memory 33 is replaced or initialized, for example.

In the above description, the case in which a Gold-sequence pseudo-random number is used as a scramble key has been described. However, the random number or pseudo-random number used as a scramble key is not limited to the above example. For example, an M-sequence pseudo-random number generated using only one LFSR or a physical random number using thermal noise may be used.

The method of scrambling the address is not limited to the above-described example. Another method using a scramble key set by a random number or a pseudo-random number may be employed.

In the above description, the IC card 2 has been described as a communication partner of the reader/writer 1. Needless to say, the reader/writer 1 may communicate with devices with the contactless IC card function, such as a cellular phone, a personal digital assistant (PDA), a timepiece, and a computer with the contactless IC card function.

The memory access controller 32 shown in Fig. 2 may be applied to, besides the reader/writer, other devices for reading/writing data from/to a memory.

In the random-number output unit 42 shown in Fig. 8, besides the above-described prohibition of output of an easy-to-predict value as a scramble key, a value prohibited to be output may be set arbitrarily according to application.

Although the case in which the memory 33 shown in Fig. 2 is a non-volatile memory has been described in the above description, needless to say, the memory access controller 32 may also be used to control a volatile memory.

The user may be allowed to set values other than the LSB of the fixed values of the scramble key.

Further, the user may be allowed to set the variable values other than the fixed values of the scramble key.

It should be understood by those skilled in the art that various modifications, combinations, sub-combinations, and alterations may occur depending on design requirements and other factors insofar as they are within the scope of the appended claims or the equivalents thereof.

## Claims

1. A memory access control apparatus comprising:
scramble key generating means for generating a binary scramble key including predetermined low-order bits being fixed values where the value of the least significant bit is one and the remaining bits being a random number or a pseudo-random number; and
assigning means for scrambling a logical address using the scramble key to assign a physical address to the logical address.

2. The memory access control apparatus according to Claim 1, wherein the scramble key generating means generates the scramble key in which the fixed values are a bit stream including only ones.

3. The memory access control apparatus according to Claim 1, further comprising random number generating means for generating the random number or the pseudo-random number.

4. The memory access control apparatus according to Claim 3, wherein the random number generating means generates a Gold-sequence pseudo-random number.

5. The memory access control apparatus according to Claim 3, wherein the random number generating means generates a new random number or a new pseudo-random number in the case that the generated random number or the generated pseudo-random number is equal to a predetermined value.

6. A memory access control method comprising the steps of:
generating a binary scramble key including predetermined low-order bits being fixed values where the value of the least significant bit is one and the remaining bits being a random number or a pseudo-random number; and
scrambling a logical address using the scramble key to assign a physical address to the logical address.

7. A communication apparatus for communicating with a device with a contactless integrated circuit card function, comprising:
scramble key generating means for generating a binary scramble key including predetermined low-order bits being fixed values where the value of the least significant bit is one and the remaining bits being a random number or a pseudo-random number; and
assigning means for scrambling a logical address using the scramble key to assign a physical address to the logical address, the physical address being used for storing data read from the device with the contactless integrated circuit card function.

8. A memory access control apparatus comprising:
a scrambling key generator configured to generate a binary scramble key including predetermined low-order bits being fixed values where the value of the least significant bit is one and the remaining bits being a random number or a pseudo-random number; and
an assigning unit configured to scramble a logical address using the scramble key to assign a physical address to the logical address.

9. A communication apparatus for communicating with a device with a contactless integrated circuit card function, comprising:
a scrambling key generator configured to generating a binary scramble key including predetermined low-order bits being fixed values where the value of the least significant bit is one and the remaining bits being a random number or a pseudo-random number; and
an assigning unit configured to scramble a logical address using the scramble key to assign a physical address to the logical address, the physical address being used for storing data read from the device with the contactless integrated circuit card function.
